# EUROPÄISCHE PATENTSCHRIFT

(11) **EP 3 964 387 B1**
(45) Veröffentlichungstag und Bekanntmachung des Hinweises auf die Patenterteilung: **02.10.2024**
(21) Anmeldenummer: 21192386.7
(22) Anmeldetag: 20.08.2021
(51) Int. Cl.: B60N 2/50, B60N 2/54

(54) **FEDERELEMENT UND FAHRZEUGSITZ MIT FEDERELEMENT**
SPRING ELEMENT AND VEHICLE SEAT WITH SPRING ELEMENT
ÉLÉMENT RESSORT ET SIÈGE DE VÉHICULE POURVU D'ÉLÉMENT RESSORT

(30) Priorität: 03.09.2020 DE 102020123061
(43) Veröffentlichungstag der Anmeldung: 09.03.2022
(73) Patentinhaber: GRAMMER AG, 92289 Ursensollen (DE)
(72) Erfinder: DOTZLER, Florian, 92242 Hirschau (DE)
(74) Vertreter: Hannke Bittner & Partner mbB Regensburg

(56) Entgegenhaltungen:
- DE-A1- 102016 112 108
- DE-A1- 102017 130 450
- US-A- 5 489 139

## Beschreibung

Die Erfindung betrifft ein Federelement sowie einen Fahrzeugsitz mit diesem Federelement. Der Fahrzeugsitz umfasst ein Unterteil, ein Oberteil, einen gegenüber dem Oberteil verlagerbaren Oberteilschlitten und das Federelement zum Federn von Längshorizontalbewegungen des Oberteilschlittens relativ zu dem Oberteil, wobei ein Scherengestell vorgesehen ist, welches das Unterteil und das Oberteil relativ beweglich zueinander verbindet.

Aus dem Stand der Technik sind derartige Fahrzeugsitze mit Federelementen zum Federn von Längshorizontalbewegungen bekannt, wobei komplexe und wartungsaufwändige Konstruktionen vorgesehen sind, innerhalb der Scherengestellanordnung und in dessen Laufschienen. Aus der DE102016112108A1, DE102017130450A1 und US5489139A sind gattungsgemäße Fahrzeugsitze mit Federelementen bzw. Federelemente bekannt.

Es ist daher Aufgabe der vorliegenden Anmeldung, ein Federelement und einen Fahrzeugsitz mit dem Federelement anzugeben, welche derart angeordnet sind, dass ein kompakt gebauter Fahrzeugsitz mit guter Zugänglichkeit und einfacher Konstruktion des Federelements vorliegt.

Diese Aufgabe wird durch einen Fahrzeugsitz mit den Merkmalen des Patentanspruches 1 bzw. des Anspruchs 10 und von einem Federelement mit den Merkmalen des Patentanspruches 9 gelöst. Vorteilhafte Ausgestaltungen der Erfindung finden sich in den abhängigen Patentansprüchen.

Ein Kerngedanke der Erfindung ist es, einen Fahrzeugsitz mit den Merkmalen des Anspruchs 1 bzw. des Anspruchs 10 vorzusehen.

Unter Längshorizontalbewegungen des Oberteils gegenüber dem Unterteil sind dabei Bewegungen zu verstehen, so dass sich das Oberteil in einer Längsrichtung des Fahrzeugsitzes gesehen in einer Horizontalen bewegt. Insbesondere kann diese Bewegung des Oberteils relativ zu dem Unterteil zwangsgeführt sein, durch entsprechende bauliche Merkmale, wie Führungsschienen oder dergleichen. Insbesondere kann das Oberteil relativ zu dem Unterteil translatorisch in Richtung der Längsrichtung verlagert werden. Längshorizontalbewegungen bzw. Bewegungen des Oberteils treten dabei aufgrund von einer äußeren Krafteinwirkung auf, beispielsweise durch Translationsbewegungen des Fahrzeugs mit dem Fahrzeugsitz bei abrupten Beschleunigungsvorgängen oder dergleichen, welche zu entsprechendem Krafteintrag führen.

Aufgrund der Krafteinwirkung bzw. dem Krafteintrag wird das Oberteil relativ zu dem Unterteil verlagert, was der Bewegung bzw. der Längshorizontalbewegung entspricht.

Weiter bevorzugt ist der erste Haltearm drehbar mit dem Oberteil und der zweite Haltearm drehbar mit dem Scherengestell verbunden.

Das erste Verbindungselement ist dabei dazu vorgesehen und ausgebildet, den ersten Haltearm gegenüber dem zweiten Haltearm zu positionieren und gegebenenfalls, je nach Ausgestaltung, auch während einer Relativbewegung der Haltearme zueinander zu führen.

Unter dem elastisch deformierbaren Federelementteil ist dabei zu verstehen, dass nach einer Deformierung des Federelementteils bei keiner weiteren Krafteinwirkung wieder in seinen Ursprungszustand zurückversetzt wird, also in den unverformten Zustand.

Gemäß einer besonders bevorzugten Ausführungsform ist das elastisch deformierbare Federelementteil als ein Hartschaumelement ausgebildet, das heißt, dass das Federelementteil aus einem Schaumstoff besteht, welcher einer Verformung unter Druckbelastung einen relativ hohen Widerstand entgegensetzt. Basis-Polymere sind u.a. Formaldehyd-Harze, Polystyrol, Polyurethane und Polyvinylchlorid. Charakteristische Eigenschaften von Hartschäumen sind hohes Dämmvermögen, gute Feuchtigkeitsbeständigkeit und hohe mechanische Festigkeit. Besonders bevorzugt ist dabei Polyurethan. Als eine bekannte Marke ist hier Cellasto zu nennen.

Die Härte des Hartschaumstoffs beeinflusst dabei den erreichbaren Federweg sowie die Federrate des Federelements.

Da der Hartschaumstoff aufgrund seiner Ausgestaltung auch dämpfende Eigenschaften aufweist, eignet sich das Federelement insgesamt auch in einem gewissen Maß als ein Dämpfungselement. Das Federelement mit einem Federelementteil bestehend aus Hartschaumstoff ist gleichzeitig auch ein Dämpfungselement.

Gemäß der Erfindung ist es vorgesehen, dass das erste Verbindungselement ein erstes Verbindungselementteil und ein zweites Verbindungselementteil umfasst, wobei jeweils das erste Verbindungselementteil und das zweite Verbindungselementteil drehbar um eine erste Drehachse mit dem ersten Haltearm und drehbar um eine zweite Drehachse mit dem zweiten Haltearm verbunden ist, wobei das erste Verbindungselementteil und das zweite Verbindungselementteil in einer Erstreckungsrichtung der ersten Drehachse voneinander beabstandet angeordnet sind.

Die Verbindungselementteile können beispielsweise als Pleuel, pleuelartig oder ähnliches ausgebildet sein. Durch eine derartige Ausführung mit Verbindungselementteilen werden keine zusätzlichen Schubgelenke benötigt, was zu einer Reduzierung der Reibung führt und ebenso einem möglichen Stick-Slip-Effekt vorbeugt.

Besonders bevorzugt sind die erste Drehachse und die zweite Drehachse parallel zueinander angeordnet, weiter insbesondere in einer Breitenrichtung verlaufend angeordnet.

Weiter beeinflusst der Abstand der ersten Drehachse zu der zweiten Drehachse den erreichbaren Federweg und ebenso die Federrate des Federelements.

Durch eine Verlagerung des Oberteils relativ zu dem Unterteil wird, aufgrund der bereits beschriebenen Anordnung des Federelements, der erste Haltearm zu dem zweiten Haltearm verlagert, wodurch die Verbindungselementteile sich um die erste Drehachse und die zweite Drehachse drehen, wodurch sich die erste Drehachse und die zweite Drehachse sich gegeneinander in Längsrichtung gesehen relativ zueinander bewegen.

Besonders bevorzugt können auch mindestens ein weiteres Verbindungselement vorgesehen sein, um die Führung der Haltearme zueinander zu verbessern.

Gemäß der Erfindung ist es daher vorgesehen, dass ein zweites Verbindungselement vorgesehen ist, wobei das erste Verbindungselement ein erstes Verbindungselementteil und ein zweites Verbindungselementteil umfasst und das zweite Verbindungselement ein drittes Verbindungselementteil und ein viertes Verbindungselementteil aufweist, wobei jeweils das erste Verbindungselementteil und das zweite Verbindungselementteil drehbar um eine erste Drehachse mit dem ersten Haltearm und drehbar um eine zweite Drehachse mit dem zweiten Haltearm und jeweils das dritte Verbindungselementteil und das vierte Verbindungselementteil drehbar um eine dritte Drehachse mit dem ersten Haltearm und drehbar um eine vierte Drehachse mit dem vierten Haltearm verbunden ist, wobei das erste Verbindungselementteil und das zweite Verbindungselementteil in einer Erstreckungsrichtung der ersten Drehachse und das dritte Verbindungselementteil und vierte Verbindungselementteil in einer Erstreckungsrichtung der dritten Drehachse voneinander beabstandet angeordnet sind.

Ähnliches kann auch für weitere Verbindungselemente gelten.

Gemäß einer weiteren bevorzugten Ausführungsform ist es vorgesehen, dass der erste Haltearm einen ersten Aufnahmebereich und der zweite Haltearm einen zweiten Aufnahmebereich aufweisen, wobei das elastisch deformierbare Federelementteil mit dem ersten Aufnahmebereich und dem zweiten Aufnahmebereich zumindest in Wirkkontakt steht.

Der erste Aufnahmebereich und der zweite Aufnahmebereich können dabei an die Form des Federelementteils angepasst sein, so dass eine gute Passform des Federelementteils erreicht werden kann.

Ebenso ist es denkbar, dass das Federelementteil mit den Haltearmen fest verbunden sein kann, beispielsweise verklebt, verschraubt oder dergleichen.

Gemäß einer weiteren bevorzugten Ausführungsform ist es vorgesehen, dass das elastisch deformierbare Federelementteil im Wesentlichen quaderförmig ausgebildet ist.

Gemäß der Erfindung ist es vorgesehen, dass in einer Höhenrichtung gesehen, die erste Drehachse oberhalb der zweiten Drehachse angeordnet ist und das elastisch deformierbare Federelementteil in Erstreckungsrichtung der ersten Drehachse gesehen, zwischen dem ersten Verbindungselementteil und dem zweiten Verbindungselementteil angeordnet ist.

Eine entsprechende Anordnung gelte auch für die weiteren Verbindungselementteile, falls vorgesehen.

Gemäß einer weiteren bevorzugten Ausführungsform kann es vorgesehen sein, dass das elastisch deformierbare Federelementteil zumindest eine Vertiefung und/oder zumindest eine durchgehende Öffnung aufweist.

Bevorzugt sind die Vertiefung und die Öffnung in Breitenrichtung verlaufend angeordnet.

Die Vertiefungen und/oder Öffnungen dienen insbesondere als Ausgleichsbereiche während der Deformierung bei Verlagerung bzw. Längshorizontalbewegung, so dass die Lebensdauer weiter erhöht werden kann.

Gemäß einer weiteren bevorzugten Ausführungsform ist es vorgesehen, dass der erste Haltearm und der zweite Haltearm im Wesentlichen identisch ausgebildet sind. Hierdurch können Herstellungskosten und Einbauzeiten reduziert werden.

Ebenso ist es denkbar, dass die Verbindungselementteile im Wesentlichen identisch ausgebildet sind.

Im Wesentlichen bedeutet hierbei, dass bis auf Toleranzabweichungen die Ausbildung identisch ist.

Gelöst wird die zugrunde liegende Aufgabe auch von einem Federelement mit den Merkmalen des Anspruchs 9.

Die Ausführungen hinsichtlich des Fahrzeugsitzes mit dem Federelement sind auch auf das Federelement an sich anwendbar und ausführbar, solange eine Bezugnahme auf den Fahrzeugsitz nicht zwingend erforderlich ist.

Im Nachfolgenden wird noch das Funktionsprinzip des Federelements dargestellt.

Bei einer Relativbewegung des ersten Haltearms und des zweiten Haltearms zueinander, beispielsweise durch eine Relativbewegung des Oberteils zu dem Unterteil, wird das elastisch deformierbare Federelementteil deformiert, insbesondere komprimiert. Hierdurch entsteht eine Federwirkung und je nach Ausgestaltung des Federelementteils eine Dämpferwirkung, wodurch eine Gegenkraft durch das Federelementteil hervorgerufen wird. Durch das Verbindungselement und der jeweiligen Anordnung der Haltearme wird die Bewegung gezielt gelenkt und zusammen mit der Gegenkraft ein Rückstellmoment erzeugt, so dass das Federelementteil und entsprechend das Federelement wieder in seiner Ausgangslage bzw. Ursprungszustand bzw. Normalzustand ist.

Weiter kann durch die gleiche Ausgestaltung der Haltearme und der Anordnung des Federelementteils sowie der Verbindungselementteile erreicht werden, dass die Federrate in Längsrichtung nach vorne und in Längsrichtung nach hinten identisch sind.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: Federelement gemäß einer bevorzugten Ausführungsform;
- Fig. 1B: Federelement gemäß Figur 1A in einer Explosionsdarstellung;
- Fig. 2A: Federelement gemäß Figur 1A in einem Normalzustand in einer Seitenansicht;
- Fig. 2B: Federelement gemäß Figur 1A in einem ersten deformierten Zustand in einer Seitenansicht;
- Fig. 2C: Federelement gemäß Figur 1A in einem zweiten deformierten Zustand in einer Seitenansicht;
- Fig. 2D: Wirkprinzip des Federelements gemäß Figur 1A;
- Fig. 3A: Fahrzeugsitz mit Federelement in einem ersten deformierten Zustand in einer perspektivischen Ansicht;
- Fig. 3B: Fahrzeugsitz mit Federelement in einem zweiten deformierten Zustand in einer perspektivischen Ansicht;
- Fig. 3C: Fahrzeugsitz mit Federelement in einem Normalzustand in einer perspektivischen Ansicht;
- Fig. 4A: Fahrzeugsitz mit Federelement in einem ersten deformierten Zustand in einer Schnittdarstellung;
- Fig. 4B: Fahrzeugsitz mit Federelement in einem ersten deformierten Zustand in einer Schnittdarstellung.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

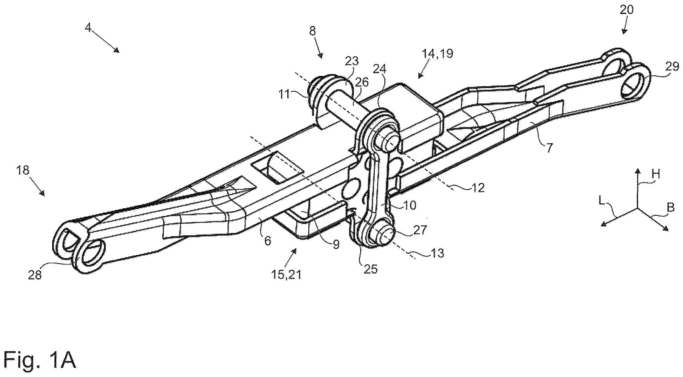

In der Figur 1A ist ein Federelement 4 gemäß einer bevorzugten Ausführungsform dargestellt. Dabei weist das Federelement 4 einen ersten Haltearm 6 und einen zweiten Haltearm 7 auf, welche insbesondere identisch ausgebildet sind.

Der erste Haltearm 6 weist ein erstes Ende 18 und ein zweites Ende 19 auf, und der zweite Haltearm 7 ein erstes Ende 20 und ein zweites Ende 21.

Die jeweiligen ersten Enden 18, 20 sind dabei als Verbindungsbereiche 28, 29 ausgebildet, wobei ein erster Verbindungsbereich 28 dem ersten Ende 18 des ersten Haltearms 6 und ein zweiter Verbindungsbereich 29 dem ersten Ende 20 des zweiten Haltearms 7 zugeordnet sind. Mittels der Verbindungsbereiche 28, 29 ist es möglich, das Federelement 4 beispielsweise an Bauteilen eines Fahrzeugsitzes (hier nicht gezeigt) anzuordnen und zu verbinden. Insbesondere sind die Verbindungsbereiche 28, 29 dazu vorgesehen und ausgebildet, eine Drehverbindung mit den Bauteilen herstellen zu können. Beispielsweise ist es denkbar, dass die Verbindungsbereiche 28, 29 Durchgangsöffnungen 30 umfasst, in welche eine Welle eingebracht werden kann. Bevorzugt weist jeder Verbindungsbereich zwei gegenüberliegende, in Breitenrichtung B gesehen, Durchgangsöffnungen 30 auf.

Besonders bevorzugt ist der erste Haltearm 6 drehbar um eine dritte Drehachse 36 mit einem ersten Bauteil (hier nicht gezeigt) und der zweite Haltearm 7 drehbar um eine vierte Drehachse 37 drehbar mit einem zweiten Bauteil (hier nicht gezeigt) verbunden. Die Bauteile können dabei beispielsweise Teile eines Fahrzeugsitzes sein, wie in nachfolgenden Figuren noch dargestellt wird.

Das zweite Ende 19 des ersten Haltearms 6 weist einen ersten Aufnahmebereich 14 und das zweite Ende 21 des zweiten Haltearms 7 einen zweiten Aufnahmebereich 15 auf, wobei das Federelementteil 9 sowohl mit dem ersten Aufnahmebereich 14 als auch dem zweiten Aufnahmebereich 15 in Wirkkontakt steht. Dabei ist es denkbar, dass entweder eine kraftschlüssige Verbindung vorgesehen ist oder eine formschlüssige Verbindung.

Die zweiten Enden 19, 21 und entsprechend die Haltearme 6, 7 sind miteinander mittels eines ersten Verbindungselements 8 verbunden, wobei das erste Verbindungselement 8 ein erstes Verbindungselementteil 10 und ein zweites Verbindungselementteil 11 umfasst.

Dabei sind das erste Verbindungselementteil 10 und das zweite Verbindungselementteil 11 in Breitenrichtung B gesehen voneinander beabstandet angeordnet. Ein erstes Ende 31 des ersten Verbindungselementteils 10 und ein erstes Ende 32 des zweiten Verbindungselementteils 11 sind drehbar um eine erste Drehachse 12 mit dem ersten Haltearm 6 und ein zweites Ende 33 des ersten Verbindungselementteils 10 und ein zweites Ende 34 des zweiten Verbindungselementteils 11 sind drehbar um eine zweite Drehachse 13 mit dem zweiten Haltearm 7 verbunden. Bevorzugt sind dabei an dem ersten Haltearm 6 eine erste Aufnahme 22 und eine zweite Aufnahme 23 vorgesehen, welche in Breitenrichtung B voneinander beabstandet sind und Durchgangsöffnungen aufweisen, in welchen eine erste Welle 26, welche die erste Drehachse 12 definiert, eingebracht ist. Weiter bevorzugt sind dabei an dem zweiten Haltearm 6 eine dritte Aufnahme 24 und eine vierte Aufnahme 25 vorgesehen, welche in Breitenrichtung B voneinander beabstandet sind und Durchgangsöffnungen aufweisen, in welchen eine zweite Welle 27, welche die zweite Drehachse 13 definiert, eingebracht ist.

In Höhenrichtung H gesehen ist dabei die erste Drehachse 12 über der zweiten Drehachse 13 angeordnet. Besonders bevorzugt sind die Drehachse 12, 13 parallel zueinander und in Breitenrichtung B verlaufend angeordnet.

Weiter ist bevorzugt das Federelementteil 9 einerseits zwischen den Haltearmen 6, 7 und andererseits zwischen den Verbindungselementteilen 10, 11 angeordnet.

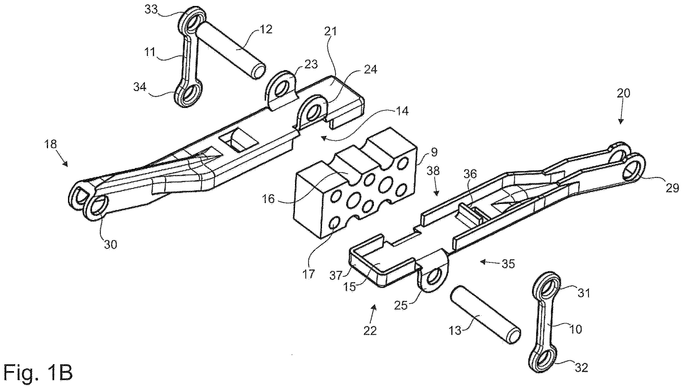

In der Figur 1B ist das Federelement 4 der Figur 1A in einer Explosionsdarstellung nochmals dargestellt. Hierbei wird näher auf die Ausgestaltung der Aufnahmebereiche 14, 15 eingegangen. Besonders bevorzugt ist die Form des Aufnahmebereichs 14, 15 an die Form des Federelementteils 9 angepasst, hier vorliegend ist das Federelementteil 9 quaderförmig ausgebildet, wobei jedoch auch andere Formen grundsätzlich möglich sind.

Um das Federelementteil 9 in einer Position fixieren zu können, beispielsweise bei einem Einbau, ist es vorgesehen, dass eine Begrenzung 35 vorgesehen ist mit einem ersten Begrenzungsteil 36 und einem zweiten Begrenzungsteil 37, welche in Längsrichtung L voneinander beabstandet sind und sich in Höhenrichtung H und Breitenrichtung B erstrecken. Ebenso können seitliche Begrenzungsteile 38 vorgesehen sein, welche sich ebenso in Höhenrichtung H und in Längsrichtung L erstrecken.

Besonders bevorzugt weist das Federelementteil 9 zumindest eine Vertiefung 16 und zumindest eine durchgehende Öffnung 17 auf, wobei beides dafür vorgesehen sind, die Struktur des Federelementteils 9 bei einer Deformierung entlasten zu können.

Die Vertiefung bzw. Vertiefungen 16 sind dabei auf einer Oberfläche des Federelementteils 9 angeordnet.

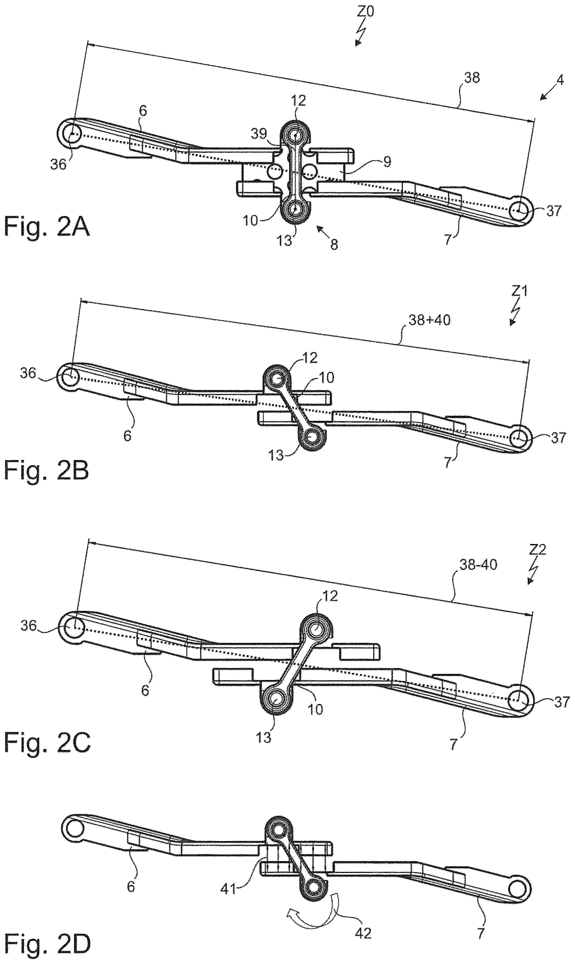

In der Figur 2A ist das Federelement 4 nach Figur 1A in einer Seitenansicht und in einem Normalzustand Z0 bzw. Urzustand gezeigt, also in einem Zustand, in welchem das Federelementteil 9 nicht deformiert ist.

Ein erster Abstand 38 der dritten Drehachse 36 bis zu der vierten Drehachse 37 definiert eine Ausgangslänge des Federelements 4, und ein zweiter Abstand 39 ist vorgesehen zwischen der ersten Drehachse 12 und der zweiten Drehachse 13. Der zweite Abstand 39 bestimmt insbesondere den erreichbaren Federweg des Federelements 4, und ebenso die Federrate des Federelements 4.

Besonders bevorzugt ist dabei das Federelementteil 9 und das erste Verbindungselementteil 10 bzw. das zweite Verbindungselementteil 11 derart angeordnet, dass eine Verbindungslinie zwischen der ersten Drehachse 12 und der zweiten Drehachse 13 in dem Normalzustand Z0 mittig zu dem Federelementteil 9 angeordnet ist.

Die Figur 2B zeigt das Federelement 4 in einem ersten deformierten Zustand Z1 und die Figur 2C zeigt das Federelement 4 in einem zweiten deformierten Zustand Z2.

Dabei unterscheiden sich die Zustände Z1, Z2 in der Richtung der Verlagerung des ersten Haltearms 6 zu dem zweiten Haltearm 7. Durch die Verbindung der Haltearme 6, 7 mittels der Verbindungselementteile 10, 11 und ggfs. weiterer Verbindungselementteile wird das Verbindungselementteil 10, 11 um die erste Drehachse 12 als auch die zweite Drehachse 13 gedreht. Entsprechend verändert sich dabei der erste Abstand 38 zu einer Länge aus erster Abstand 38 plus oder minus einem Federweg 40, abhängig von der Richtung, und zwar um einen resultierenden Betrag aufgrund der Bewegung der Verbindungselementteile 10, 11 und der daraus folgenden Verlagerung der Haltearme 6, 7 zueinander.

In der Figur 2D wird weiter noch dargestellt, wie eine Rückstellkraft mittels des Federelementteils 9 erzeugt wird.

Bei einer Relativbewegung des ersten Haltearms 6 und des zweiten Haltearms 7 zueinander, beispielsweise durch eine Relativbewegung eines Oberteils zu einem Unterteil eines Fahrzeugsitzes, wird das elastisch deformierbare Federelementteil 9 deformiert, insbesondere komprimiert. Hierdurch entsteht eine Federwirkung und je nach Ausgestaltung des Federelementteils 9 eine Dämpferwirkung, wobei durch die Federwirkung eine Gegenkraft 41 durch das Federelementteil 9 hervorgerufen wird. Durch das Verbindungselement 8 und der jeweiligen Anordnung der Haltearme 6, 7 wird die Bewegung gezielt gelenkt und zusammen mit der Gegenkraft ein Rückstellmoment 42 erzeugt, so dass das Federelementteil 9 und entsprechend das Federelement 4 wieder in seiner Ausgangslage bzw. Ursprungszustand bzw. Normalzustand Z0 ist.

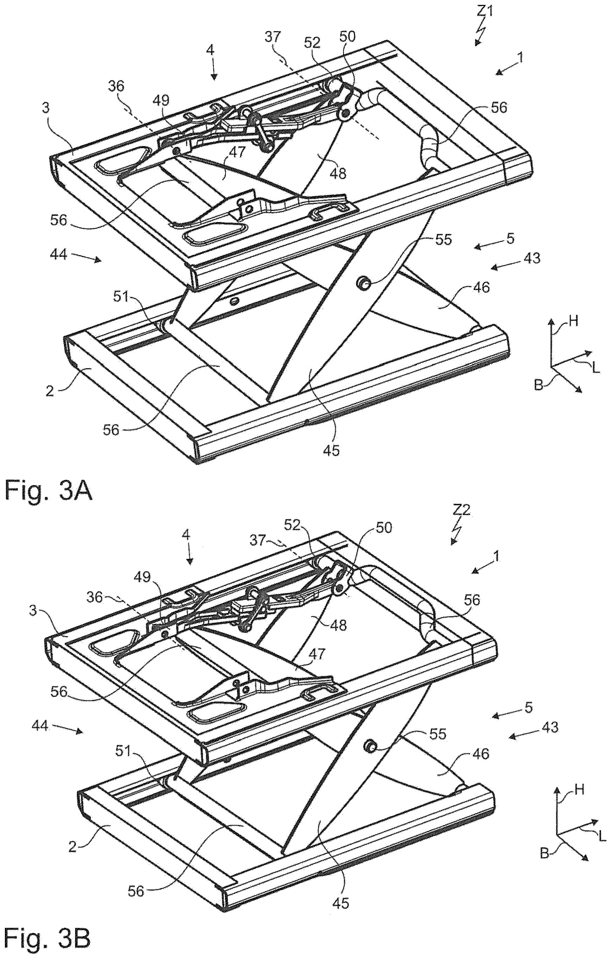

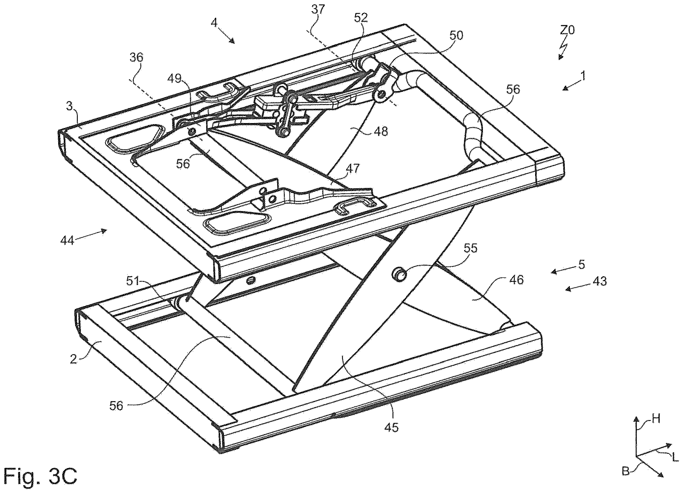

In den Figuren 3A, 3B und 3C wird ein Fahrzeugsitz 1 dargestellt, welcher das Federelement 4 aufweist, um Bewegungen zu federn, vorliegend eines Oberteils 3 des Fahrzeugsitzes 1 relativ zu einem Unterteil 2. In der Figur 3A ist der Fahrzeugsitz 1 im Zustand Z1, in der Figur 3B im Zustand Z2 und in der Figur 3C in dem Zustand Z0 gezeigt.

Weiter ist ein Scherengestell 5 vorgesehen, welches das Unterteil 2 und das Oberteil 3 in einer Höhenrichtung H relativ beweglich zueinander verbindet.

Das Federelement 4 ist dabei drehbar um die dritte Drehachse 36 mit dem Oberteil 3 und drehbar um die vierte Drehachse 37 mit dem Scherengestell 5 verbunden.

Bevorzugt weist das Scherengestell ein erstes Scherenpaar 43 und ein in Breitenrichtung B beabstandetes zweites Scherenpaar 44 auf, wobei die Scherenpaare 43, 44 jeweils eine erste Schwinge 45, 47 und eine zweite Schwinge 46, 48 aufweisen.

Besonders bevorzugt ist das Federelement 4 drehbar mit einer ersten Schwinge 45, 47 oder mit einer zweiten Schwinge 46, 48 verbunden. Weiter bevorzugt sind zu den Haltearmen 6, 7 korrespondierendes erstes und zweites Aufnahmeelement 49, 50 vorgesehen, welche ausgebildet und vorgesehen sind, die Haltearme 6, 7 mit dem Oberteil 3 und dem Scherengestell 5 zu verbinden.

Weiter ist folgende Anordnung der Schwingen 45, 46, 47, 48 denkbar: die ersten Schwingen 45, 47 sind jeweils mittels eines ersten Loslagers 51 mit dem Unterteil 2 verbunden, wobei andererseits die ersten Schwingen 45, 47 jeweils mittels eines zweiten Loslagers 52 mit dem Oberteil 3 verbunden sind. Die zweiten Schwingen 46, 48 sind jeweils mittels eines dritten Loslagers 53 mit dem Oberteil 3 verbunden, wobei andererseits die zweiten Schwingen 46, 48 jeweils mittels eines Festlagers 54 mit dem Unterteil 2 verbunden sind.

Weiter sind die ersten Schwingen 45, 47 und die zweiten Schwingen 46, 48 mittels einer gemeinsamen Drehachse 55 drehbar verbunden.

Das Federelement 4 in dem Fahrzeugsitz 1 ist dabei als ein Längshorizontalfederelement ausgebildet, das heißt, dass es vorgesehen ist, um Bewegungen in Längshorizontalrichtung des Oberteils 3 gegenüber dem Unterteil 2 zu federn und ggfs. zu dämpfen.

Es ist weiterhin denkbar, dass zwischen gleich angeordneten Loslagern unterschiedlicher Scherenpaare ein Verbindungsrohr 56 vorgesehen ist, zur weiteren Stabilisierung. Das jeweilige Verbindungsrohr 56 erstreckt sich dabei in Breitenrichtung B und kann dabei gerade oder in einer beliebigen anderen Gestalt ausgebildet sein.

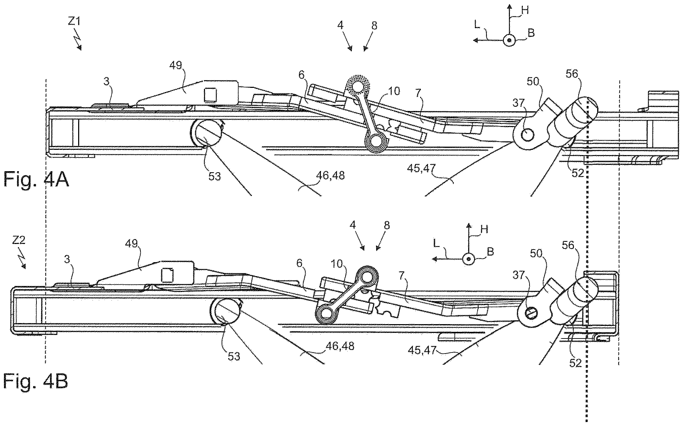

In den Figuren 4A und 4B sind Ausschnitte in einem Schnitt der Figuren 3A und 3B zu erkennen, welche in einem direkten Vergleich zueinander angeordnet sind.

Ein Vergleich der Figuren 4A und 4B zeigt die Position relativ zwischen den Zuständen Z1 und Z2, wodurch die Längshorizontalbewegung des Oberteils 3 gut nachvollziehbar ist. Ebenso sind die Stellungen des Federelements 4 und insbesondere der Haltearme 6, 7 und des Verbindungselements 8 zu erkennen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Unterteil
- 3: Oberteil
- 4: Federelement
- 5: Scherengestell
- 6: erster Haltearm
- 7: zweiter Haltearm
- 8: erstes Verbindungselement
- 9: Federelementteil
- 10: erstes Verbindungselementteil
- 11: zweites Verbindungselementteil
- 12: erste Drehachse
- 13: zweite Drehachse
- 14: erster Aufnahmebereich
- 15: zweiter Aufnahmebereich
- 16: Vertiefung
- 17: Durchgangsöffnung
- 18: erstes Ende erster Haltearm
- 19: zweites Ende erster Haltearm
- 20: erstes Ende zweiter Haltearm
- 21: zweites Ende zweiter Haltearm
- 22: erste Aufnahme
- 23: zweite Aufnahme
- 24: dritte Aufnahme
- 25: vierte Aufnahme
- 26: erste Welle
- 27: zweite Welle
- 28: erster Verbindungsbereich
- 29: zweiter Verbindungsbereich
- 30: Durchgangsöffnung
- 31: erstes Ende erstes Verbindungselementteil
- 32: zweites Ende erstes Verbindungselementteil
- 33: erstes Ende zweites Verbindungselementteil
- 34: zweites Ende zweites Verbindungselementteil
- 36: dritte Drehachse
- 37: vierte Drehachse
- 38: erster Abstand
- 39: zweiter Abstand
- 40: Federweg
- 41: Gegenkraft
- 42: Rückstellmoment
- 43: erstes Scherenpaar
- 44: zweites Scherenpaar
- 45: erste Schwinge erstes Scherenpaar
- 46: zweite Schwinge erstes Scherenpaar
- 47: erste Schwinge zweites Scherenpaar
- 48: zweite Schwinge zweites Scherenpaar
- 49: Aufnahmeelement
- 50: Aufnahmeelement
- 51: erstes Loslager
- 52: zweites Loslager
- 53: drittes Loslager
- 54: Festlager
- 55: gemeinsame Drehachse
- 56: Verbindungsrohr
- L: Längsrichtung
- B: Breitenrichtung
- H: Höhenrichtung

## Patentansprüche

1. Fahrzeugsitz (1) mit einem Unterteil (2), einem gegenüber dem Unterteil (2) in einer Längsrichtung (L) relativ verlagerbaren Oberteil (3) und einem Federelement (3) zum Federn von Längshorizontalbewegungen des Oberteils (3) relativ zu dem Unterteil (2), wobei ein Scherengestell (5) vorgesehen ist, welches das Unterteil (2) und das Oberteil (3) in einer Höhenrichtung (H) relativ beweglich zueinander verbindet,
**dadurch gekennzeichnet, dass**
das Federelement (5) einen ersten Haltearm (6), welcher mit dem Oberteil (3) verbunden ist, und einen zweiten Haltearm (7), welcher mit dem Scherengestell (5) verbunden ist, umfasst, wobei der erste Haltearm (6) und der zweite Haltearm (7) mittels eines ersten Verbindungselements (8) miteinander derart verbunden sind, dass bei einer Verlagerung des Oberteils (3) relativ zu dem Unterteil (2) der erste Haltearm (6) zu dem zweiten Haltearm (7) verlagert wird,
und wobei ein elastisch deformierbares Federelementteil (9) vorgesehen ist, welches mit dem ersten Haltearm (6) und dem zweiten Haltearm (7) zumindest in Wirkkontakt steht und bei einer Verlagerung des ersten Haltearms (6) relativ zu dem zweiten Haltearm (7) deformiert wird, wobei das erste Verbindungselement (8) ein erstes Verbindungselementteil (10) und ein zweites Verbindungselementteil (11) umfasst, wobei jeweils das erste Verbindungselementteil (10) und das zweite Verbindungselementteil (11) drehbar um eine erste Drehachse (12) mit dem ersten Haltearm (6) und drehbar um eine zweite Drehachse (13) mit dem zweiten Haltearm (7) verbunden ist, wobei in einer Höhenrichtung (H) gesehen die erste Drehachse (12) oberhalb der zweiten Drehachse (13) angeordnet ist.

2. Fahrzeugsitz (1) nach Anspruch 1,
**dadurch gekennzeichnet, dass**
das erste Verbindungselementteil (10) und das zweite Verbindungselementteil (11) in einer Erstreckungsrichtung der ersten Drehachse (12) voneinander beabstandet angeordnet sind.

3. Fahrzeugsitz (1) nach Anspruch 1 oder 2,
**dadurch gekennzeichnet, dass**
der erste Haltearm (6) einen ersten Aufnahmebereich (14) und der zweite Haltearm (7) einen zweiten Aufnahmebereich (15) aufweisen, wobei das elastisch deformierbare Federelementteil (9) mit dem ersten Aufnahmebereich (14) und dem zweiten Aufnahmebereich (15) zumindest in Wirkkontakt steht.

4. Fahrzeugsitz (1) nach Anspruch 2,
**dadurch gekennzeichnet, dass**
das elastisch deformierbare Federelementteil (9) in Erstreckungsrichtung der ersten Drehachse (12) gesehen zwischen dem ersten Verbindungselementteil (10) und dem zweiten Verbindungselementteil (11) angeordnet ist.

5. Fahrzeugsitz (1) nach einem der Ansprüche 1 bis 4,
**dadurch gekennzeichnet, dass**
das elastisch deformierbare Federelementteil (9) zumindest teilweise aus Polyurethan besteht.

6. Fahrzeugsitz (1) nach einem der Ansprüche 1 bis 5,
**dadurch gekennzeichnet, dass**
das elastisch deformierbare Federelementteil (9) im Wesentlichen quaderförmig ausgebildet ist.

7. Fahrzeugsitz (1) nach einem der Ansprüche 1 bis 6,
**dadurch gekennzeichnet, dass**
das elastisch deformierbare Federelementteil (9) zumindest eine Vertiefung und/oder zumindest eine durchgehende Öffnung (17) aufweist.

8. Fahrzeugsitz (1) nach einem der Ansprüche 1 bis 7,
**dadurch gekennzeichnet, dass**
der erste Haltearm (6) und der zweite Haltearm (7) im Wesentlichen identisch ausgebildet sind.

9. Federelement (4) umfassend einen ersten Haltearm (6) und einen zweiten Haltearm (7), wobei der erste Haltearm (6) und der zweite Haltearm (7) mittels eines ersten Verbindungselements (8) miteinander derart verbunden sind, dass der erste Haltearm (6) zu dem zweiten Haltearm (7) verlagerbar ist, wobei ein elastisch deformierbares Federelementteil (9) vorgesehen ist, welches mit dem ersten Haltearm (6) und dem zweiten Haltearm (7) zumindest in Wirkkontakt steht und bei einer Verlagerung des ersten Haltearms (6) relativ zu dem zweiten Haltearm (7) deformiert wird, wobei wobei das erste Verbindungselement (8) ein erstes Verbindungselementteil (10) und ein zweites Verbindungselementteil (11) umfasst, wobei jeweils das erste Verbindungselementteil (10) und das zweite Verbindungselementteil (11) drehbar um eine erste Drehachse (12) mit dem ersten Haltearm (6) und drehbar um eine zweite Drehachse (13) mit dem zweiten Haltearm (7) verbunden ist, wobei in einer Höhenrichtung (H) gesehen die erste Drehachse (12) oberhalb der zweiten Drehachse (13) angeordnet ist.

10. Fahrzeugsitz (1) mit einem Unterteil (2), einem gegenüber dem Unterteil (2) in einer Längsrichtung (L) relativ verlagerbaren Oberteil (3) und einem Federelement (3) zum Federn von Längshorizontalbewegungen des Oberteils (3) relativ zu dem Unterteil (2), wobei ein Scherengestell (5) vorgesehen ist, welches das Unterteil (2) und das Oberteil (3) in einer Höhenrichtung (H) relativ beweglich zueinander verbindet,
**dadurch gekennzeichnet, dass**
das Federelement (5) einen ersten Haltearm (6), welcher mit dem Oberteil (3) verbunden ist, und einen zweiten Haltearm (7), welcher mit dem Scherengestell (5) verbunden ist, umfasst, wobei der erste Haltearm (6) und der zweite Haltearm (7) mittels eines ersten Verbindungselements (8) miteinander derart verbunden sind, dass bei einer Verlagerung des Oberteils (3) relativ zu dem Unterteil (2) der erste Haltearm (6) zu dem zweiten Haltearm (7) verlagert wird,
und wobei ein elastisch deformierbares Federelementteil (9) vorgesehen ist, welches mit dem ersten Haltearm (6) und dem zweiten Haltearm (7) zumindest in Wirkkontakt steht und bei einer Verlagerung des ersten Haltearms (6) relativ zu dem zweiten Haltearm (7) deformiert wird, wobei ein zweites Verbindungselement vorgesehen ist, wobei das erste Verbindungselement (8) ein erstes Verbindungselementteil (10) und ein zweites Verbindungselementteil (11) umfasst und das zweite Verbindungselement ein drittes Verbindungselementteil und ein viertes Verbindungselementteil aufweist, wobei jeweils das erste Verbindungselementteil (10) und das zweite Verbindungselementteil (11) drehbar um eine erste Drehachse (12) mit dem ersten Haltearm (6) und drehbar um eine zweite Drehachse (13) mit dem zweiten Haltearm (7) und jeweils das dritte Verbindungselementteil und das vierte Verbindungselementteil drehbar um eine dritte Drehachse mit dem ersten Haltearm (6) und drehbar um eine vierte Drehachse mit dem zweiten Haltearm (7) verbunden ist, wobei das erste Verbindungselementteil (10) und das zweite Verbindungselementteil (11) in einer Erstreckungsrichtung der ersten Drehachse (12) und das dritte Verbindungselementteil und vierte Verbindungselementteil in einer Erstreckungsrichtung der dritten Drehachse voneinander beabstandet angeordnet sind.

## Claims

1. Vehicle seat (1) having a lower part (2), an upper part (3) which is displaceable relative to the lower part (2) in a longitudinal direction (L), and a spring element (3) for cushioning longitudinal horizontal movements of the upper part (3) relative to the lower part (2), wherein a scissors frame (5) is provided which connects the lower part (2) and the upper part (3) in a height direction (H) so that they can move relative to one another,
**characterised in that**
the spring element (5) comprises a first holding arm (6) which is connected to the upper part (3), and a second holding arm (7) which is connected to the scissors frame (5), the first holding arm (6) and the second holding arm (7) being connected to one another by means of a first connecting element (8), in such a way that the first holding arm (6) is displaced towards the second holding arm (7) during a displacement of the upper part (3) relative to the lower part (2),
and wherein a resiliently deformable spring element part (9) is provided which is at least in operative contact with the first holding arm (6) and the second holding arm (7) and is deformed during a displacement of the first holding arm (6) relative to the second holding arm (7), wherein the first connecting element (8) comprises a first connecting element part (10) and a second connecting element part (11), the first connecting element part (10) and the second connecting element part (11) being connected to the first holding arm (6) so as to be rotatable about a first axis of rotation (12) and connected to the second holding arm (7) so as to be rotatable about a second axis of rotation (13), wherein in a height direction (H) the first axis of rotation (12) above the second axis of rotation (13) arranged is.

2. Vehicle seat (1) according to claim 1,
**characterised in that**
the first connecting element part (10) and the second connecting element part (11) are arranged spaced apart from each other in the extension direction of the first axis of rotation.

3. Vehicle seat (1) according to claim 1 or 2,
**characterised in that**
the first holding arm (6) has a first receiving region (14) and the second holding arm (7) has a second receiving region (15), wherein the resiliently deformable spring element part (9) having the first receiving region (14) and the second receiving region (15) at least being in operative contact.

4. Vehicle seat (1) according to claim 2,
**characterised in that**
the resiliently deformable spring element part (9) is arranged between the first connecting element part (10) and the second connecting element part (11), seen in the extension direction of the first axis of rotation (12).

5. Vehicle seat (1) according to any of claim 1 to 4,
**characterised in that**
the resiliently deformable spring element part (9) consists at least partially of polyurethane.

6. Vehicle seat (1) according to any of claim 1 to 5,
**characterised in that**
the resiliently deformable spring element part (9) is designed substantially to have a cuboid shape.

7. Vehicle seat (1) according to any of claims 1 to 6,
**characterised in that**
the resiliently deformable spring element part (9) has at least one depression and/or at least one continuous opening (17).

8. Vehicle seat (1) according to one of the claims 1 to 7,
**characterised in that**
the first holding arm (6) and the second holding arm (7) are designed to be substantially identical.

9. The spring element (4) comprises a first holding arm (6) and a second holding arm (7) wherein the first holding arm (6) and the second holding arm (7) are connected to one another by means of a first connecting element (8), in such a way that the first holding arm (6) is displaceable towards the second holding arm (7); wherein a resiliently deformable spring element part (9) is provided which is at least in operative contact with the first holding arm (6) and the second holding arm (7) and is deformed during a displacement of the first holding arm (6) relative to the second holding arm (7), wherein the first connecting element (8) comprising a first connecting element part (10) and a second connecting element part (11), wherein the first connecting element part (10) and the second connecting element part (11) being connected to the first holding arm (6) so as to be rotatable about a first axis of rotation (12) and connected to the second holding arm (7) so as to be rotatable about a second axis of rotation (13), wherein the first axis of rotation (12) is arranged above the second axis of rotation (13) in a vertical direction (H).

10. Vehicle seat (1) having a lower part (2), an upper part (3) which is displaceable relative to the lower part (2) in a longitudinal direction (L), and a spring element (3) for cushioning longitudinal horizontal movements of the upper part (3) relative to the lower part (2), wherein a scissors frame (5) is provided which connects the lower part (2) and the upper part (3) in a height direction (H) so that they can move relative to one another,
**characterised in that**
the spring element (5) comprises a first holding arm (6) which is connected to the upper part (3), and a second holding arm (7) which is connected to the scissors frame (5), wherein the first holding arm (6) and the second holding arm (7) being connected to one another by means of a first connecting element (8), in such a way that the first holding arm (6) is displaced towards the second holding arm (7) during a displacement of the upper part (3) relative to the lower part (2),
and wherein a resiliently deformable spring element part (9) being provided which is at least in operative contact with the first holding arm (6) and the second holding arm (7) and is deformed during a displacement of the first holding arm (6) relative to the second holding arm (7), wherein a second connecting element is provided, wherein the first connecting element (8) comprising a first connecting element part (10) and a second connecting element part (11), and the second connecting element having a third connecting element part and a fourth connecting element part, wherein the first connecting element part (10) and the second connecting element part (11) being connected to the first holding arm (6) so as to be rotatable about a first axis of rotation (12) and connected to the second holding arm (7) so as to be rotatable about a second axis of rotation (13), and the third connecting element part and the fourth connecting element part are in each case connected to the first holding arm (6) so as to be rotatable about a third axis of rotation, and connected to the second holding arm (7) so as to be rotatable about a fourth axis of rotation, wherein the first connecting element part (10) and the second connecting element part (11) being arranged spaced apart from one another in an extension direction of the first axis of rotation (12) and the third connecting element part and fourth connecting element part being arranged spaced apart from one another in an extension direction of the third axis of rotation.

## Revendications

1. Siège de véhicule (1) ayant une partie inférieure (2), une partie supérieure (3) déplaçable par rapport à la partie inférieure (2) dans une direction longitudinale (L) et un élément ressort (3) pour amortir des mouvements horizontaux longitudinaux de la partie supérieure (3) par rapport à la partie inférieure (2), un châssis à ciseaux (5) étant prévu, lequel relie la partie inférieure (2) et la partie supérieure (3) dans une direction de hauteur (H) de telle sorte qu'elles puissent se déplacer l'une par rapport à l'autre,
**caractérisé par le fait que**
l'élément ressort (5) comporte un premier bras de maintien (6), lequel est relié à la partie supérieure (3), et un second bras de maintien (7), lequel est relié au châssis à ciseaux (5), le premier bras de maintien (6) et le second bras de maintien (7) étant reliés l'un à l'autre au moyen d'un premier élément de liaison (8) de telle sorte que, lors d'un déplacement de la partie supérieure (3) par rapport à la partie inférieure (2), le premier bras de maintien (6) est déplacé vers le second bras de maintien (7),
et une partie d'élément ressort (9) élastiquement déformable est prévue, laquelle est au moins en contact opérationnel avec le premier bras de maintien (6) et le second bras de maintien (7) et est déformée lors d'un déplacement du premier bras de maintien (6) par rapport au second bras de maintien (7), le premier élément de liaison (8) comportant une première partie d'élément de liaison (10) et une deuxième partie d'élément de liaison (11), la première partie d'élément de liaison (10) et la deuxième partie d'élément de liaison (11) étant respectivement reliées au premier bras de maintien (6) de manière à pouvoir tourner autour d'un premier axe de rotation (12) et au second bras de maintien (7) de manière à pouvoir tourner autour d'un deuxième axe de rotation (13), le premier axe de rotation (12) étant disposé au-dessus du deuxième axe de rotation (13), vu dans une direction de hauteur (H).

2. Siège de véhicule (1) selon la revendication 1,
**caractérisé par le fait que**
la première partie d'élément de liaison (10) et la deuxième partie d'élément de liaison (11) sont disposées à une distance l'une de l'autre dans une direction d'étendue du premier axe de rotation (12).

3. Siège de véhicule (1) selon l'une des revendications 1 ou 2,
**caractérisé par le fait que**
le premier bras de maintien (6) présente une première région de réception (14) et le second bras de maintien (7) présente une seconde région de réception (15), la partie d'élément ressort (9) élastiquement déformable étant au moins en contact opérationnel avec la première région de réception (14) et la seconde région de réception (15).

4. Siège de véhicule (1) selon la revendication 2,
**caractérisé par le fait que**
la partie d'élément ressort (9) élastiquement déformable est disposée entre la première partie d'élément de liaison (10) et la deuxième partie d'élément de liaison (11), vu dans le sens d'étendue du premier axe de rotation (12).

5. Siège de véhicule (1) selon l'une des revendications 1 à 4,
**caractérisé par le fait que**
la partie d'élément ressort (9) élastiquement déformable est constituée au moins en partie de polyuréthane.

6. Siège de véhicule (1) selon l'une des revendications 1 à 5,
**caractérisé par le fait que**
la partie d'élément ressort (9) élastiquement déformable est réalisée sensiblement en forme parallélépipédique.

7. Siège de véhicule (1) selon l'une des revendications 1 à 6,
**caractérisé par le fait que**
la partie d'élément ressort (9) élastiquement déformable présente au moins un renfoncement et/ou au moins une ouverture continue (17).

8. Siège de véhicule (1) selon l'une des revendications 1 à 7,
**caractérisé par le fait que**
le premier bras de maintien (6) et le second bras de maintien (7) sont réalisés de manière sensiblement identique.

9. Elément ressort (4) comportant un premier bras de maintien (6) et un second bras de maintien (7), le premier bras de maintien (6) et le second bras de maintien (7) étant reliés l'un à l'autre au moyen d'un premier élément de liaison (8) de telle sorte que le premier bras de maintien (6) est déplaçable vers le second bras de maintien (7), une partie d'élément ressort (9) élastiquement déformable étant prévue, laquelle est au moins en contact opérationnel avec le premier bras de maintien (6) et le second bras de maintien (7) et est déformée lors d'un déplacement du premier bras de maintien (6) par rapport au second bras de maintien (7), le premier élément de liaison (8) comportant une première partie d'élément de liaison (10) et une deuxième partie d'élément de liaison (11), la première partie d'élément de liaison (10) et la deuxième partie d'élément de liaison (11) étant respectivement reliées au premier bras de maintien (6) de manière à pouvoir tourner autour d'un premier axe de rotation (12) et au second bras de maintien (7) de manière à pouvoir tourner autour d'un deuxième axe de rotation (13), le premier axe de rotation (12) étant disposé au-dessus du deuxième axe de rotation (13), vu dans une direction de hauteur (H).

10. Siège de véhicule (1) ayant une partie inférieure (2), une partie supérieure (3) déplaçable par rapport à la partie inférieure (2) dans une direction longitudinale (L) et un élément ressort (3) pour amortir des mouvements horizontaux longitudinaux de la partie supérieure (3) par rapport à la partie inférieure (2), un châssis à ciseaux (5) étant prévu, lequel relie la partie inférieure (2) et la partie supérieure (3) dans une direction de hauteur (H) de telle sorte qu'elles puissent se déplacer l'une par rapport à l'autre,
**caractérisé par le fait que**
l'élément ressort (5) comporte un premier bras de maintien (6), lequel est relié à la partie supérieure (3), et un second bras de maintien (7), lequel est relié au châssis à ciseaux (5), le premier bras de maintien (6) et le second bras de maintien (7) étant reliés l'un à l'autre au moyen d'un premier élément de liaison (8) de telle sorte que, lors d'un déplacement de la partie supérieure (3) par rapport à la partie inférieure (2), le premier bras de maintien (6) est déplacé vers le second bras de maintien (7),
et une partie d'élément ressort (9) élastiquement déformable étant prévue, laquelle est au moins en contact opérationnel avec le premier bras de maintien (6) et le second bras de maintien (7) et est déformée lors d'un déplacement du premier bras de maintien (6) par rapport au second bras de maintien (7), un deuxième élément de liaison étant prévu, le premier élément de liaison (8) comportant une première partie d'élément de liaison (10) et une deuxième partie d'élément de liaison (11) et le deuxième élément de liaison présentant une troisième partie d'élément de liaison et une quatrième partie d'élément de liaison, la première partie d'élément de liaison (10) et la deuxième partie d'élément de liaison (11) étant respectivement reliées au premier bras de maintien (6) de manière à pouvoir tourner autour d'un premier axe de rotation (12) et au second bras de maintien (7) de manière à pouvoir tourner autour d'un second axe de rotation (13), et la troisième partie d'élément de liaison et la quatrième partie d'élément de liaison étant respectivement reliées au premier bras de maintien (6) de manière à pouvoir tourner autour d'un troisième axe de rotation et au second bras de maintien (7) de manière à pouvoir tourner autour d'un quatrième axe de rotation, la première partie d'élément de liaison (10) et la deuxième partie d'élément de liaison (11) étant disposées à distance l'une de l'autre dans une direction d'étendue du premier axe de rotation (12) et la troisième partie d'élément de liaison et la quatrième partie d'élément de liaison étant disposées à distance l'une de l'autre dans une direction d'étendue du troisième axe de rotation.
